# EUROPEAN PATENT APPLICATION

(11) **EP 1 881 657 A1**
(43) Date of publication of application: **23.01.2008**
(21) Application number: 07014416.7
(22) Date of filing: 23.07.2007
(51) Int. Cl.: H04L 12/56, H04L 12/28

(54) **Method and apparatus for estimating radio link status in a packet-switched network system**

(30) Priority: 21.07.2006 KR 20060068538
(71) Applicant: Samsung Electronics Co., Ltd., Suwon-si Gyeonggi-do (KR)
(72) Inventor: Kim, Young-Bum, Suwon-si Gyeonggi-do (KR); Lee, Ju-Ho, Suwon-si Gyeonggi-do (KR); Cho, Joon-Young, Suwon-si Gyeonggi-do (KR); Kim, Seong-Hun, Suwon-si Gyeonggi-do (KR); Van Lieshout, Gert Jan, Staines Middlesex TW18 4QE (GB)
(74) Representative: Lang, Johannes

(57) **Abstract**

A method and apparatus for estimating the radio link status between an MS and a BS in a wireless communication system are provided, in which the MS and the BS make the same decision as to the radio link status. The method and apparatus provide a radio link status estimation procedure suitable for a Packet-Switched network system. Thus, when each of an MS and a BS detects errors in its radio link status, it notifies the other party of the poor radio link status, thereby preventing an unnecessary MS or BS operation and saving radio resources.

## Description

### BACKGROUND OF THE INVENTION

### 1. Field of the Invention

The present invention generally relates to a Packet-Switched (PS) network system. More particularly, the present invention relates to a method and apparatus for estimating radio link status.

### 2. Description of the Related Art

When the radio link status between a transmitter and a receiver becomes poor at or drops below a certain level, normal data transmission/reception is impossible in a wireless communication system. Hence, a Mobile Station (MS) or a Base Station (BS) determines if a Radio Link Failure (RLF) has occurred by monitoring the radio link status and operates accordingly.

To estimate the radio link status between the MS and the BS, a conventional Wideband Code Division Multiple Access (WCDMA) system estimates the channel status using a Dedicated Physical Control Channel (DPCCH) or uses the Cyclic Redundancy Check (CRC) check result of a Dedicated Physical Data Channel (DPDCH).

In the process of determining if the RLF has occurred, an 'out-of-sync' state and an 'in-sync' state are defined, and an out-of-sync indicator or an in-sync indicator is generated in the physical layer and reported to an upper layer.

The out-of-sync indicator and the in-sync indicator are created according to the following rules.
1. When the DPCCH measurement is less than a threshold for a set time period, or the CRC checks of all transport blocks mapped onto the DPDCH have failed during a set time, the out-of sync indicator is generated.
2. When the DPCCH measurement is greater than the threshold for the set time period or the CRC check of at least one of the blocks mapped onto the DPDCH is successful during the set time, the in-sync indicator is generated.

When the out-of-sync indicator is successively reported a number of times greater than or equal to a threshold number of times and then a predetermined timer expires, the MS or the BS determines the RLF and discontinues DPCCH and DPDCH transmission. As a result, the other party, i.e. the receiver, fails to receive the DPCCH or the DPDCH and thus generates the out-of-sync indicator according to the out-of-sync generation rule. If this state lasts until a predetermined timer expires, the RLF is finally declared.

In this manner, when either the MS or the BS determines the RLF state, the other is aware of the RLF state naturally. This process is called RLF synchronization.

Without the RLF synchronization, that is, when the MS determines an RLF but the BS does not, or vice versa, the party that determines that the RLF has not occurred, unnecessarily transmits data or control information, resulting in radio resource consumption.

In WCDMA, the RLF determination and synchronization process is based on a Circuit-Switched (CS) system in which data or control information is continuously transmitted. When a radio link is established between the MS and the BS, data is continuously transmitted on the DPCCH or the DPDCH and the DPCCH or DPDCH transmission is discontinued in an RLF state. However, a Packet-Switched (PS) network system like a Long Term Evolution (LTE) system evolved from the WCDMA system does not use a dedicated physical channel that continuously delivers data, such as the DPCCH or the DPDCH used conventionally to determine in-sync/out-of-sync. Accordingly, there exists a need for specifying a new RLF determination and synchronization procedure.

### SUMMARY OF THE INVENTION

An aspect of exemplary embodiments of the present invention is to address at least the problems and/or disadvantages of the prior art and to provide at least the advantages described below. Accordingly, an aspect of exemplary embodiments of the present invention is to provide a radio link status estimation procedure suitable for a PS network system.

In accordance with an aspect of exemplary embodiments of the present invention, there is provided a method for estimating radio link status in at least one of an MS and a BS in a PS network system, which includes monitoring a reception channel status, determining whether the reception channel status satisfies a first condition, an out-of-sync indicator is generated if the reception channel status satisfies the first condition, monitoring the transmission channel status if the reception channel status does not satisfy the first condition, determining whether the transmission channel status satisfies a second condition, an out-of-sync indicator is generated if the transmission channel status satisfies the second condition, and determining that an RLF has occurred and transmission of at least one of data and control information is discontinued, if N or more out-of-sync indicators are generated during a predetermined first time period, N being a natural number.

In accordance with another aspect of exemplary embodiments of the present invention, there is provided an apparatus for estimating radio link status in a PS network system, in which a radio link estimator generates an out-of-sync indicator according to reception channel status or transmission channel status, and determines whether an RLF has occurred based on the generated out-of-sync indicator, and a transmission signal processor receives a control signal according to the determination of the radio link estimator and determines whether to transmit a signal according to the control signal. Here, the radio link estimator determines whether the reception channel status satisfies a first condition, generates an out-of-sync indicator if the reception channel status satisfies the first condition, determines whether the transmission channel status satisfies a second condition if the reception channel status does not satisfy the first condition, generates an out-of-sync indicator if the transmission channel status satisfies the second condition, and determines that the RLF has occurred if N or more out-of sync indicators are generated during a predetermined first time period, N being a natural number, and outputs a control signal commanding discontinuing transmission of at least one of data and control information.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
FIG. 1 illustrates a basic RLF determination procedure;
FIGs. 2A and 2B are flowcharts illustrating operations for generating an out-of-sync indicator and an in-sync indicator;
FIGs. 3A and 3B are flowcharts illustrating an operation of an MS according to an exemplary embodiment of the present invention;
FIGs. 4A and 4B are flowcharts illustrating an operation of a BS according to an exemplary embodiment of the present invention;
FIG. 5 is a block diagram of the MS according to an exemplary embodiment of the present invention; and
FIG. 6 is a block diagram of the BS according to an exemplary embodiment of the present invention.

Throughout the drawings, the same drawing reference numerals will be understood to refer to the same elements, features and structures.

### DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Exemplary embodiments of the present invention define an RLF determination and synchronization procedure suitable for use in a cellular PS network system and provide associated operations of a BS and an MS, compared to the conventional RLF determination and synchronization procedure based on a CS system characterized by continuous transmission of data or control information in a WCDMA system.

An MS or a BS can estimate a Reception (Rx) radio link status from data or control information received on an Rx channel. That is, the MS or the BS generates an out-of-sync indicator or an in-sync indicator by which to determine an RLF using data or control information for a predetermined monitoring time period. A physical layer creates the out-of-sync indicator or the in-sync indicator according to the following rules and reports the indicator to an upper layer.
1. If a channel quality measured from control information for a predetermined monitoring time is less than a threshold, or if the CRC checks of all transport blocks mapped onto a data channel have failed for a predetermined monitoring time, the out-of-sync indicator is generated.
2. If the channel quality measurement is greater than the threshold for the monitoring time or if the CRC check of at least one of block mapped onto the data channel is successful for the monitoring time, the in-sync indicator is generated.

The control information can be a pilot signal or a Channel Quality Indicator (CQI) representing a channel status. The monitoring time should be set to be sufficiently long to estimate the radio link status. If the monitoring time is too short, the radio link status is not fully evaluated. If the monitoring time is too long, a change in the radio link status is elusive. In the nature of the PS system, transmission of data or control information may be discontinuous.

A description will be made of an RLF determination procedure. The RLF determination procedure will be described from the viewpoint of the MS, but it is to be clearly understood that the same RLF determination procedure applies to the BS.

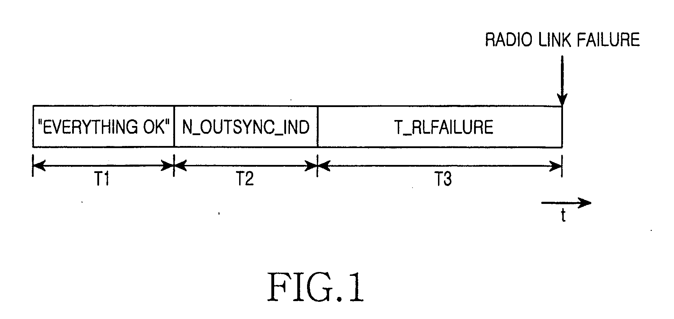

FIG. 1 illustrates an operation for determining an RLF based on out-of-sync indicators according to an exemplary embodiment of the present invention.
- If a physical layer reports a number of successive out-of-sync indicators greater than or equal to a threshold number to an upper layer and then a predetermined timer expires, the MS determines an RLF has occurred.

Referring to FIG. 1, data or control information is transmitted/received normally between the MS and the BS during a time period T1. After the end of the time period T1, N_OUTSYNC_IND successive out-of-sync indicators are internally reported in the MS during a time period T2. When the time period T2 ends, a timer T_RLFFAILURE is activated to count a time period T3. If N_INSYNC_IND in-sync indicators are reported during the time period T3, the MS resets the timer T_RLFFAILURE, determining that an RLF has not occurred, and then performs a normal transmission/reception.

If the time period T3 elapses and the timer T_RLFFAILURE expires without N_INSYNC_IND in-sync indicators being reported, the MS determines that an RLF has occurred upon expiration of the timer T_RLFFAILURE and discontinues transmission of data or control information to the BS. As the BS receives no more data or control information from the MS, the BS determines that an RLF has occurred according to the out-of-sync indicator generation rule and the RLF determination procedure. Thus, both the MS and the BS make the same decision that the RLF has occurred. That is, RLF synchronization is acquired between the MS and the BS.

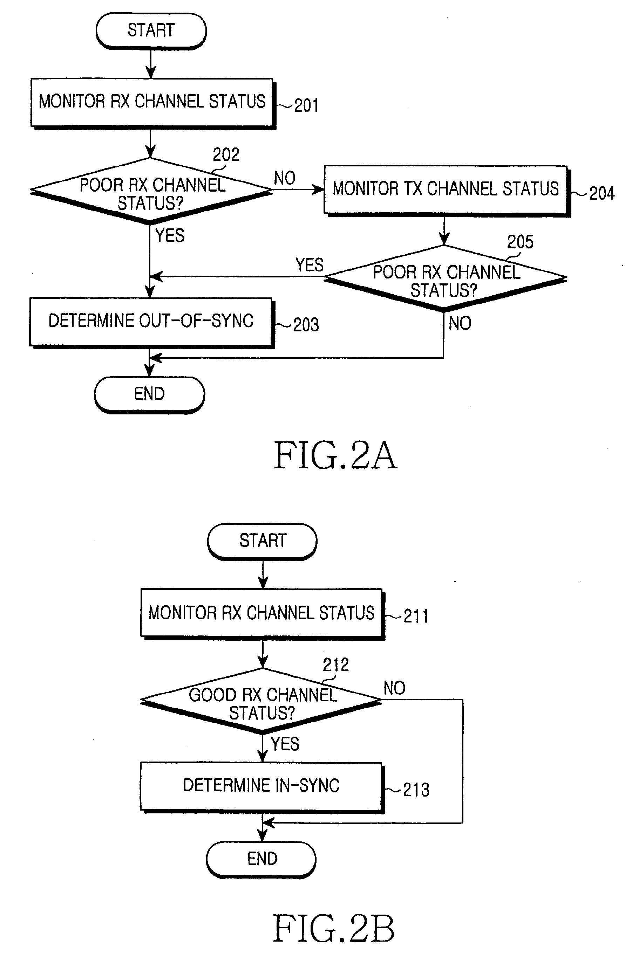

FIG. 2A is a flowchart illustrating an operation for generating an out-of sync indicator according to an exemplary embodiment of the present invention.

Referring to FIG. 2A, the MS or the BS estimates the Rx channel status during a monitoring time period in step 201 and evaluates the estimated Rx channel status in step 202. If the Rx channel status is poor, i.e. below a threshold level, the MS or the BS generates an out-of-sync indicator and reports it to the upper layer in step 203. If the Rx channel status is good, i.e. greater than or equal to the threshold level, the MS or the BS estimates Tx channel status in step 204 and evaluates the estimated Tx channel status in step 205. If the Tx channel status is poor, the MS or the BS generates an out-of-sync indicator and reports it to the upper layer in step 203. If the Tx channel status is good, the MS or the BS ends the out-of-sync generation procedure without generating an out-of-sync indicator.

FIG. 2B is a flowchart illustrating an operation for generating an in-sync indicator according to an exemplary embodiment of the present invention.

Referring to FIG. 2B, the MS or the BS estimates the Rx channel status during a monitoring time period in step 211 and evaluates the estimated Rx channel status in step 212. If the Rx channel status is good, the MS or the BS generates an in-sync indicator and reports it to the upper layer in step 213. If the Rx channel status is poor, the MS or the BS ends the in-sync indicator generation procedure without generating an in-sync indicator.

The monitoring period during which the channel status is monitored to generate an out-of-sync indicator or an in-sync indicator is preset. On a monitoring period basis, an out-of-sync indicator or an in-sync indicator is generated. According to the RLF determination procedure described with reference to FIG. 1, the occurrence or non-occurrence of an RLF is determined using the out-of-sync indicators or in-sync indicators generated in the above procedure.

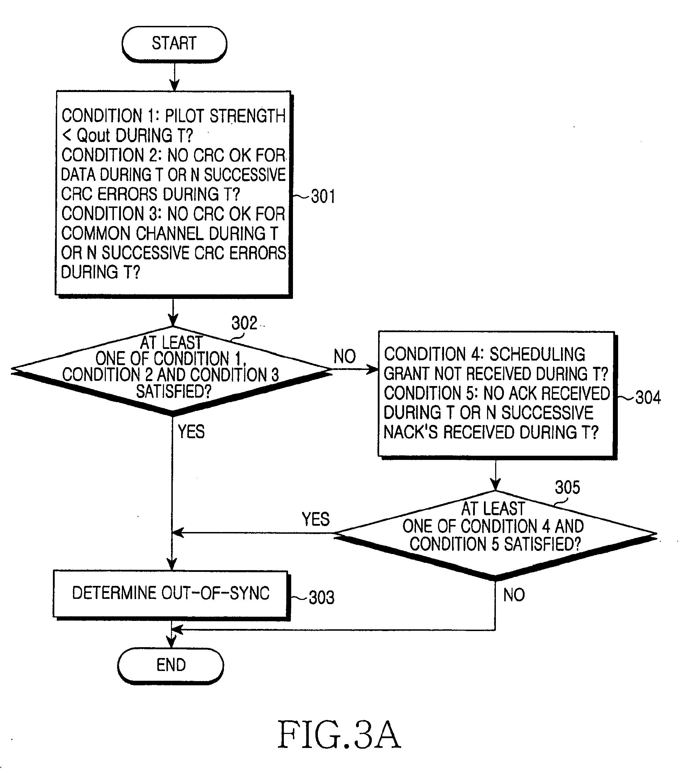

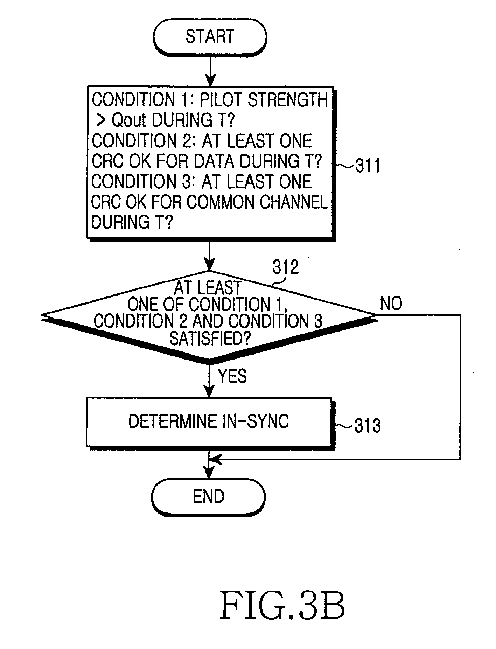

In relation to an RLF determination procedure according to an exemplary embodiment of the present invention, an MS operation for generating an out-of sync or in-sync indicator will be described with reference to FIG. 3.

FIG. 3A is a flowchart illustrating an out-of-sync indicator generation operation in the MS according to an exemplary embodiment of the present invention.

Referring to FIG. 3A, the MS checks the following conditions to estimate its downlink channel status in step 301 and determines whether Condition 1, Condition 2, or Condition 3 is satisfied in step 302.
Condition 1: Is the strength of a received pilot signal less than a threshold Qout during a predetermined time period T?
Condition 2: Do all of the CRC checks of the received data fail during the time period T? Or have N successive CRC errors occurred during the time period T?
Condition 3: Do all of the CRC checks on a common channel received in a cell failed during the time period T? Or have N successive CRC errors occurred during the time period T?

The time period T, the threshold Qout, and the number N are all preset and the parameters may vary in the conditions. The common channel can be a Broadcast Channel (BCH) or a Paging Channel (PCH).

If Condition 2 cannot be determined due to the absence of data received a long period of time, the MS can check the common channel instead. Thus, the MS can estimate the downlink channel status by checking the above conditions.

If at least one of the conditions is fulfilled in step 302, which equates to a poor downlink channel status, the MS determines that it is in an out-of-sync state, generates an out-of-sync indicator, and reports the out-of-sync indicator to the upper layer in step 303. Then the MS ends the out-of-sync indicator generation procedure.

If none of the conditions are fulfilled in step 302, which equates to a good downlink channel status, the MS checks Condition 4 or Condition 5 in steps 304 and 305.
Condition 4: Has the MS not received a scheduling grant from the BS for the time period T although the MS transmitted scheduling request information to the BS?
Condition 5: Has the MS not received an ACKnowledgement (ACK) for transmitted data during the time period T? Or has the MS received N successive Negative-ACKs (NACKs) during the time period T?

The MS can estimate its uplink channel status by checking Condition 4 and Condition 5. If the downlink channel status is good and Condition 4 is fulfilled, the MS can determine that the BS has failed to receive the scheduling request information due to a poor uplink channel status. If the downlink channel status is good and Condition 5 is fulfilled, it can be said that the BS has failed to receive data from the MS due to a poor uplink channel status.

If at least one of Condition 4 and Condition 5 is fulfilled in step 305, the MS generates an out-of-sync indicator, considering that it is in the out-of-sync state and reports the out-of-sync indicator to the upper layer in step 303. Then the MS ends the out-of-sync indicator generation procedure.

If none of the conditions are fulfilled in step 305, which equates to a good uplink channel status, the MS ends the out-of-sync indicator generation procedure without generating an out-of-sync indicator.

FIG. 3B is a flowchart illustrating an in-sync indicator generation operation in the MS according to an exemplary embodiment of the present invention.

Referring to FIG. 3B, the MS checks the following conditions and determines whether Condition 1, Condition 2, or Condition 3 is satisfied in steps 311 and 312.
Condition 1: Is the strength of a received pilot signal greater than a threshold Qin during a predetermined time period T?
Condition 2: Is at least one of the CRC checks of the received data successful during the time period T?
Condition 3: Is at least one of the CRC checks of a common channel received in a cell successful during the time period T?

The time period T, the threshold Qin, and the number N are all preset and the parameters may vary with the conditions.

If at least one of the conditions is fulfilled in step 312, the MS determines that it is in an in-sync state, generates an in-sync indicator, and reports the in-sync indicator to the upper layer in step 313. Then the MS ends the in-sync indicator generation procedure. If none of the conditions are fulfilled in step 312, the MS ends the in-sync indicator generation procedure.

Subsequently, the RLF determination procedure described with reference to FIG. 1 is performed using the out-of-sync indicators or in-sync indicators generated on a monitoring time T basis in the above-described procedure.

If the MS determines an RLF has occurred, the MS discontinues transmission of uplink data and control information. The control information can be a channel sounding pilot by which the BS estimates the uplink channel status, a CQI indicating the downlink channel status estimated by the MS, uplink ACK/NACK information indicating the presence or absence of errors in downlink data, etc. The CQI can represent the channel status of a band allocated to the MS by a scheduler or the channel status of a maximum band measurable at the MS. When determining that an RLF has occurred, the MS may transmit a preset CQI codeword indicating the RLF occurrence, instead of the CQI.

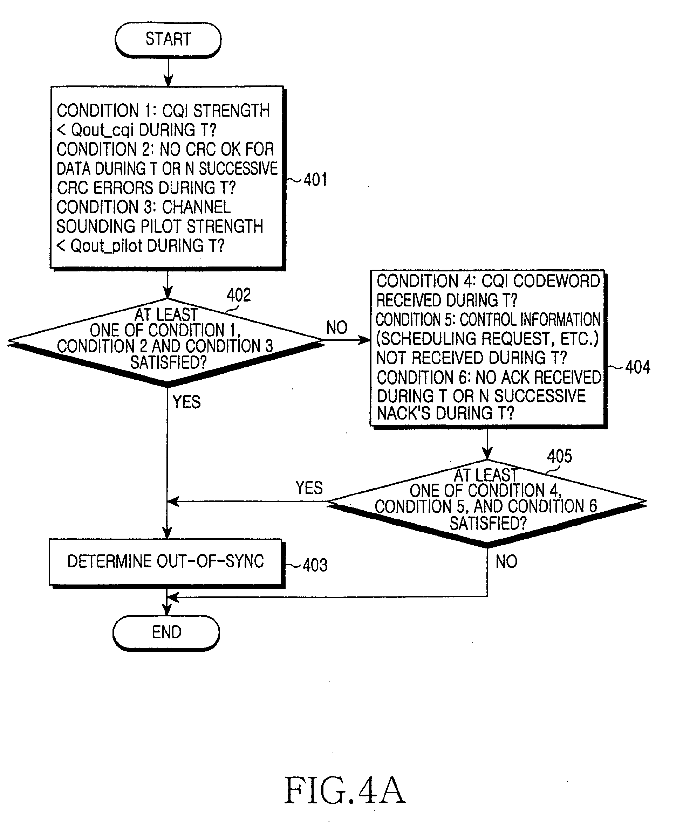

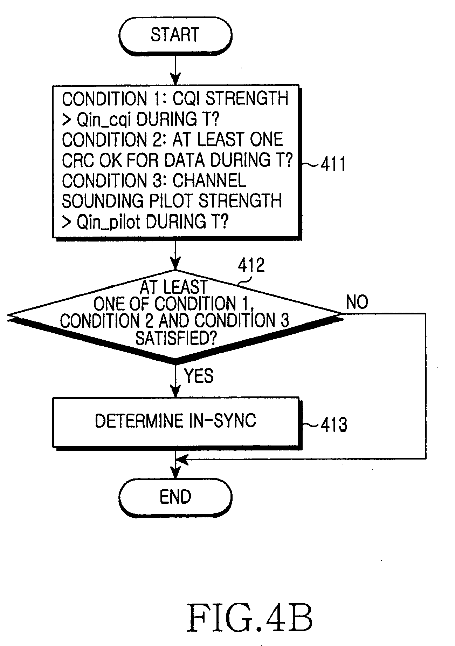

Now a description will be made of a BS operation for generating an out-of-sync/in-sync indicator with reference to FIGs. 4A and 4B.
FIG. 4A is a flowchart illustrating an out-of-sync indicator generation operation in the BS according to an exemplary embodiment of the present invention.

Referring to FIG. 4A, the BS checks the following conditions and determines whether Condition 1, Condition 2, or Condition 3 is satisfied in steps 401 and 402.
Condition 1: Is the strength of a received CQI signal less than a threshold Qout_cqi during a predetermined time period T?
Condition 2: Do all of the CRC checks on the received data fail during the time period T? Or have N successive CRC errors occurred during the time period T?
Condition 3: Is the strength of a received sounding channel pilot signal less than a threshold Qout_pilot during the time period T?

The time period T, the thresholds Qout_cqi and Qout_pilot, and the number N are all preset and the time T may vary with the conditions. The CQI is a value representing a downlink channel status measured by the MS and reported to the BS. The channel sounding pilot is a pilot signal that the MS transmits so as to enable the BS to estimate the uplink channel status.

The BS can estimate the uplink channel status by checking the above conditions.

If at least one of the conditions is fulfilled in step 402, which equates to a poor uplink channel status, the BS determines that it is in an out-of-sync state, generates an out-of-sync indicator, and reports the out-of-sync indicator to the upper layer in step 403. Then the BS ends the out-of-sync indicator generation procedure.

If none of the conditions are fulfilled in step 402, which equates to a good uplink channel status, the BS checks Condition 4, Condition 5, or Condition 6 in steps 404 and 405.
Condition 4: Has the BS received a preset CQI codeword indicating RLF during the time period T?
Condition 5: Has the BS not received uplink control information during the time period T?
Condition 6: Has the BS not received an ACK for transmitted data during the time period T? Or has the BS received N successive NACKs during the time period T?

The time T is preset and can be set to a different value with each condition.

The BS can estimate its downlink channel status by checking Condition 4, Condition 5, and Condition 6. If the uplink channel status is good and Condition 4 is fulfilled, the BS can determine that the uplink channel status is poor. The uplink control information can be scheduling request information in Condition 5. If the uplink channel status is good and Condition 5 is fulfilled, the BS can determine that the MS has discontinued uplink transmission, considering that the downlink channel status is poor. If the uplink channel status is good and Condition 6 is fulfilled, the BS can determine that the MS has failed to receive data from the BS due to a poor downlink channel status.

If at least one of Condition 4, Condition 5, and Condition 6 is fulfilled in step 405, the BS generates an out-of-sync indicator, considering that it is in the out-of-sync state and reports the out-of-sync indicator to the upper layer in step 403. Then the BS ends the out-of-sync indicator generation procedure. If none of the conditions are fulfilled in step 405, the BS ends the out-of-sync indicator generation procedure without generating an out-of-sync indicator.
FIG. 4B is a flowchart illustrating an in-sync indicator generation operation in the BS according to an exemplary embodiment of the present invention.

Referring to FIG. 4B, the BS checks the following conditions and determines whether Condition 1, Condition 2, or Condition 3 is satisfied in steps 411 and 412.
Condition 1: Is the decoded value of a received CQI greater than a threshold Qin_cqi during a predetermined time period T? That is, is the channel status at or above a predetermined level?
Condition 2: Is at least one of the CRC checks of the received data successful during the time period T?
Condition 3: Is the strength of a received channel sounding pilot greater than a threshold Qin_pilot during the time period T?

The time period T, the thresholds Qin_cqi and Qin_pilot, and the number N are all preset and the parameter T can be set to a different value with the conditions.

If at least one of the conditions is fulfilled in step 412, the BS determines that it is in an in-sync state, generates an in-sync indicator, and reports the in-sync indicator to the upper layer in step 413. Then the BS ends the in-sync indicator generation procedure. If none of the conditions are fulfilled in step 412, the BS ends the in-sync indicator generation procedure.

Subsequently, the RLF determination procedure described with reference to FIG. 1 is performed using the out-of-sync indicators or in-sync indicators generated on a monitoring time T basis in the above-described procedure.

If the BS determines that an RLF has occurred, the BS discontinues transmission of downlink data and control information. The control information can be a scheduling grant, downlink ACK/NACK information indicating the presence or absence of errors in uplink data, etc.

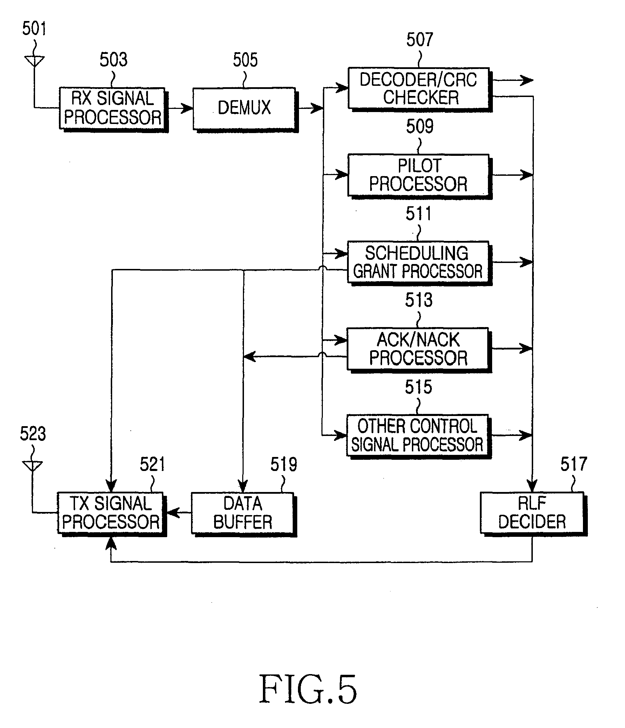

FIG. 5 is a block diagram of the MS according to an exemplary embodiment of the present invention.

Referring to FIG. 5, in the MS, an Rx signal processor 503 processes a signal received from the BS through an Rx antenna 501 by Fast Fourier Transform (FFT), channel estimation, channel equalization, etc. A Demultiplexer (DEMUX) 505 demultiplexes the processed signal into data, a pilot signal, an ACK/NACK signal, a scheduling grant, and other control signals.

A decoder/CRC checker 507 decodes the data received from the DEMUX 505, performs a CRC check on the decoded data, and notifies an RLF decider 517 of the CRC check result. When the decoded data passes the CRC check, it is final data that a user acquires. A pilot processor 509 measures the strength of the pilot signal received from the DEMUX 505 and provides pilot strength measurement to the RLF decider 517. A scheduling grant processor 511 decodes the scheduling grant received from the DEMUX 505 and provides the decoded scheduling grant to a data buffer 519 and a Tx signal processor 521. The scheduling grant processor 511 also notifies the RLF decider 517 of the presence or absence of a scheduling grant. An ACK/NACK processor 513 decodes the ACK/NACK signal received from the DEMUX 505 and provides the decoded ACK/NACK signal to the data buffer 519. The ACK/NACK processor 513 also notifies the RLF decider 517 of the presence or absence of an ACK/NACK signal. An other control signal processor 515 receives a common channel signal from a cell so that the MS can acquire common information, and notifies the RLF decider 517 of the CRC check result of the common channel signal.

The RLF decider 517 determines whether an RLF has occurred using the signals received from the decoder/CRC checker 507, the pilot processor 509, the schedule grant processor 511, the ACK/NACK processor 513, and the other control signal processor 515 according to the RLF determination procedure of the MS. If the RLF decider 517 determines that an RLF has occurred, the RLF decoder 517 outputs a control signal commanding the discontinuance of data or control information to the Tx signal processor 521.

The data buffer 519 and the Tx signal processor 521 control the amount of transmission data or determine how to map resources using the signals received from the schedule grant processor 521. The data buffer 519 also determines whether to transmit new data or retransmit transmitted data at the next transmission time based on the signal received from the ACK/NACK processor 513.

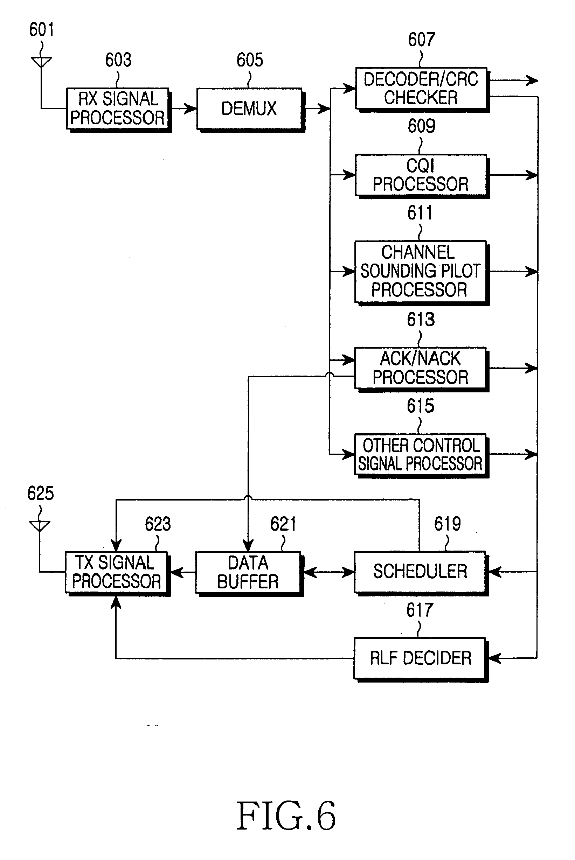

FIG. 6 is a block diagram of the BS according to an exemplary embodiment of the present invention.

Referring to FIG. 6, in the BS, an Rx signal processor 603 processes a signal received from the MS through an Rx antenna 601 by FFT, channel estimation, channel equalization, etc. A DEMUX 605 demultiplexes the processed signal into data, a CQI, a channel sounding pilot, an ACK/NACK signal, and other control signals.

A decoder/CRC checker 607 decodes the data received from the DEMUX 605, performs a CRC check on the decoded data, and notifies an RLF decider 617 of the CRC check result. When the decoded data passes the CRC check, it is final data that a user acquires. A CQI processor 609 measures the strength of the CQI signal received from the DEMUX 605, decodes the CQI signal, and provides CQI strength measurement and the decoding result to the RLF decider 617. A channel sounding pilot processor 611 measures the strength of the channel sounding pilot signal received from the DEMUX 605 and provides the measurement to the RLF decider 617. An ACK/NACK processor 613 decodes the ACK/NACK signal received from the DEMUX 605 and provides the decoded ACK/NACK signal to a data buffer 621. The ACK/NACK processor 613 also notifies the RLF decider 617 of the presence or absence of an ACK/NACK signal. An other control signal processor 615 receives scheduling request information from the MS and provides it to a scheduler 619 and the RLF decider 617.

The scheduler 619 performs scheduling based on signals received from the decoder/CRC checker 607, the CQI processor 609, the channel sounding pilot processor 611, the ACK/NACK processor 613, the other control signal processor 615, and the data buffer 621. Specifically, the scheduler 619 adjusts the amount of transmission data by controlling the data buffer 621 and the Tx signal processor 623, determines who to map resources to, and determines parameters associated with data transmission from the MS.

The RLF decider 617 determines whether an RLF has occurred using the signals received from the decoder/CRC checker 607, the CQI processor 609, the channel sounding pilot processor 611, the ACK/NACK processor 613, and the other control signal processor 615 according to the RLF determination procedure of the BS. If the RLF decider 617 determines that an RLF has occurred, the RLF decoder 617 outputs a control signal commanding the discontinuance of data or control information to the Tx signal processor 623.

The data buffer 619 determines whether to transmit new data or retransmit transmitted data at the next transmission time based on the signal received from the ACK/NACK processor 613.

As is apparent from the above description, the present invention provides a radio link status estimation procedure suitable for a PS network system. Thus, when each of an MS and a BS detects errors in its radio link status, it notifies the other party of the poor radio link status, thereby preventing an unnecessary MS or BS operation and saving radio resources.

While the invention has been shown and described with reference to certain exemplary embodiments of the present invention thereof, it will be understood by those skilled in the art that various changes in form and details may be made therein without departing from the spirit and scope of the present invention as defined by the appended claims and their equivalents.

## Claims

1. A method for estimating radio link status in at least one of a Mobile Station (MS) and a Base Station (BS) in a Packet-Switched (PS) network system, comprising:
monitoring a reception channel status;
determining if the reception channel status satisfies a first condition and generating an out-of-sync indicator if the reception channel status satisfies the first condition;
monitoring a transmission channel status if the reception channel status does not satisfy the first condition;
determining if the transmission channel status satisfies a second condition and generating an out-of-sync indicator if the transmission channel status satisfies the second condition; and
determining that a Radio Link Failure (RLF) has occurred and discontinuing transmission of at least one of data and control information, if N or more out-of-sync indicators are generated during a predetermined first time period, N being a natural number.

2. The method of claim 1, wherein the determination as to whether the reception channel status satisfies the first condition and the out-of-sync indicator generation comprises:
determining by the MS if at least one or combination of first to fifth sub-conditions are fulfilled, the first sub-condition being that the strength of a pilot signal received from the BS is less than a first threshold during a predetermined second time period, the second sub-condition being that none of Cyclic Redundancy Check (CRC) checks on data received from the BS are successful during a predetermined third time period, the third sub-condition being that a predetermined number of CRC errors have successively occurred to the data during a predetermined fourth time period, the fourth sub-condition being that the third sub-condition being that none of CRC checks on a received common channel signal of a cell are successful during a predetermined fifth time period, and the fifth sub-condition being that a predetermined number of CRC errors have occurred successively to the common control channel signal during a predetermined six time period; and
generating the out-of-sync indicator by the MS, if at least one of the first to fifth sub-conditions is fulfilled.

3. The method of claim 1, wherein the determination as to whether the transmission channel status satisfies the second condition and the out-of-sync indicator generation comprises:
determining by the MS if at least one or combination of sixth and seventh sub-conditions are fulfilled, the sixth sub-condition being that a scheduling grant has not been received for scheduling request information transmitted to the BS during a predetermined seventh time period, and the seventh sub-condition being that an ACKnowledgement (ACK) signal has not been received for data transmitted to the BS during a predetermined eighth time period; and
generating the out-of-sync indicator by the MS, if at least one of the sixth and seventh sub-conditions is fulfilled.

4. The method of claim 1, wherein the determination as to whether the reception channel status satisfies the first condition and the out-of-sync indicator generation comprises:
determining by the BS whether at least one or combination of first to fourth sub-conditions are fulfilled, the first sub-condition being that the strength of a Channel Quality Indicator (CQI) received from the MS is less than a first threshold during a predetermined second time period, the second sub-condition being that none of CRC checks on data received from the MS are successful during a predetermined third time period, the third sub-condition being that a predetermined number of CRC errors have successively occurred to the data during a predetermined fourth time period, and the fourth sub-condition being that the strength of a channel sounding pilot signal is less than a second threshold during a predetermined fifth time period; and
generating the out-of-sync indicator by the BS, if at least one of the first to fourth sub-conditions is fulfilled.

5. The method of claim 1, wherein the determination as to whether the transmission channel status satisfies the second condition and the out-of-sync indicator generation comprises:
determining by the BS whether at least one or combination of fifth to eighth sub-conditions are fulfilled, the fifth sub-condition being that a predetermined CQI codeword representing an RLF has not been received during a predetermined sixth time period, the sixth sub-condition being that uplink control information has not been received during a predetermined seventh time period, the seventh sub-condition being that an ACKnowledgement (ACK) signal has not been received for data transmitted to the MS during a predetermined eighth time period, and the eighth sub-condition being that a predetermined number of Negative ACK (NACK) signals have been received for the transmitted data during a predetermined ninth time period; and
generating the out-of-sync indicator, if at least one of the fifth to eighth sub-conditions is fulfilled.

6. The method of claim 1, further comprising:
determining if the reception channel status satisfies a third condition and generating an in-sync indicator if the reception channel status satisfies the third condition, after the transmission discontinuation; and
determining that the RLF has occurred, if M or more in-sync indicators are not generated during a predetermined second time period, M being a natural number.

7. The method of claim 6, wherein the determination as to whether the reception channel status satisfies the third condition and the in-sync indicator generation comprises:
determining by the MS whether at least one or combination of first, second, and third sub-conditions are fulfilled, the first sub-condition being that the strength of a pilot signal received from the BS is greater than a predetermined threshold during a predetermined third time period, the second sub-condition being that at least one of CRC checks on data received from the BS are successful during a predetermined fourth time period, and the third sub-condition being that at least one of CRC checks on a received common channel signal of a cell is successful during a predetermined fifth time period; and
generating the in-sync indicator by the MS, if at least one of the first, second and third sub-conditions is fulfilled.

8. The method of claim 6, wherein the determination as to whether the reception channel status satisfies the third condition and the in-sync indicator generation comprises:
determining by the BS whether at least one or combination of first, second and third sub-conditions are fulfilled, the first sub-condition being that the strength of a CQI received from the MS is greater than a first threshold during a predetermined third time period, the second sub-condition being that at least one of CRC checks on data received from the MS are successful during a predetermined fourth time period, and the third sub-condition being that the strength of a channel sounding pilot signal is greater than a second threshold during a predetermined fifth time period; and
generating the out-of-sync indicator by the BS, if at least one of the first, second and third sub-conditions is fulfilled.

9. An apparatus for estimating radio link status in a Packet-Switched (PS) network system, comprising:
a radio link estimator for generating an out-of-sync indicator according to a reception channel status or a transmission channel status, and determining if a Radio Link Failure (RLF) has occurred based on the generated out-of-sync indicator; and
a transmission signal processor for receiving a control signal according to the determination of the radio link estimator and determining whether to transmit a signal according to the control signal,
wherein the radio link estimator determines if the reception channel status satisfies a first condition, generates an out-of-sync indicator if the reception channel status satisfies the first condition, determines if the transmission channel status satisfies a second condition if the reception channel status does not satisfy the first condition, generates an out-of-sync indicator if the transmission channel status satisfies the second condition, and determines that the RLF has occurred if N or more out-of-sync indicators are generated during a predetermined first time period, N being a natural number, and outputs a control signal commanding a discontinuance of transmission of at least one of data and control information.

10. The apparatus of claim 9, wherein the first condition includes at least one or combination of first to fifth sub-conditions, the first sub-condition being that the strength of a pilot signal received from the BS is less than a first threshold during a predetermined second time period, the second sub-condition being that none of Cyclic Redundancy Check (CRC) checks on data received from the BS are successful during a predetermined third time period, the third sub-condition being that a predetermined number of CRC errors have successively occurred to the data during a predetermined fourth time period, the fourth sub-condition being that the third sub-condition being that none of CRC checks on a received common channel signal of a cell are successful during a predetermined fifth time period, and the fifth sub-condition being that a predetermined number of CRC errors have occurred successively to the common control channel signal during a predetermined six time period, and
wherein the radio link estimator generates the out-of-sync indicator, if at least one of the first to fifth sub-conditions is fulfilled.

11. The apparatus of claim 9, wherein the second condition includes at least one or combination of sixth and seventh sub-conditions, the sixth sub-condition being that a scheduling grant has not been received for scheduling request information transmitted to the BS during a predetermined seventh time period, and the seventh sub-condition being that an ACKnowledgement (ACK) signal has not been received for data transmitted to the BS during a predetermined eighth time period, and
wherein the radio link estimator generates the out-of-sync indicator, if at least one of the sixth and seventh sub-conditions is fulfilled.

12. The apparatus of claim 9, wherein the first condition includes at least one or combination of first to fourth sub-conditions, the first sub-condition being that the strength of a Channel Quality Indicator (CQI) received from the MS is less than a first threshold during a predetermined second time period, the second sub-condition being that none of CRC checks on data received from the MS are successful during a predetermined third time period, the third sub-condition being that a predetermined number of CRC errors have successively occurred to the data during a predetermined fourth time period, and the fourth sub-condition being that the strength of a channel sounding pilot signal is less than a second threshold during a predetermined fifth time period, and
wherein the radio link estimator generates the out-of-sync indicator, if at least one of the first to fourth sub-conditions is fulfilled.

13. The apparatus of claim 9, wherein the second condition includes at least one or combination of fifth to eight sub-conditions, the fifth sub-condition being that a predetermined CQI codeword representing an RLF has not been received during a predetermined sixth time period, the sixth sub-condition being that uplink control information has not been received during a predetermined seventh time period, the seventh sub-condition being that an ACKnowledgement (ACK) signal has not been received for data transmitted to the MS during a predetermined eighth time period, and the eighth sub-condition being that a predetermined number of Negative ACK (NACK) signals have been received for the transmitted data during a predetermined ninth time period, and
wherein the radio link estimator generates the out-of-sync indicator, if at least one of the fifth to eighth sub-conditions is fulfilled.

14. The apparatus of claim 9, wherein the radio link estimator determines whether the reception channel status satisfies a third condition, after the transmission discontinuation, generates an in-sync indicator if the reception channel status satisfies the third condition, and determines that the RLF has occurred, if M or more in-sync indicators are not generated during a predetermined second time period, M being a natural number.

15. The apparatus of claim 14, wherein the third condition includes at least one or combination of first, second and third sub-conditions, the first sub-condition being that the strength of a pilot signal received from the BS is greater than a predetermined threshold during a predetermined third time period, the second sub-condition being that at least one of CRC checks on data received from the BS are successful during a predetermined fourth time period, and the third sub-condition being that at least one of CRC checks on a received common channel signal of a cell is successful during a predetermined fifth time period, and
wherein the radio link estimator generates the in-sync indicator, if at least one of the first, second and third sub-conditions is fulfilled.

16. The apparatus of claim 14, wherein the third condition includes at least one or combination of first, second and third sub-conditions, the first sub-condition being that the strength of a CQI received from the MS is greater than a first threshold during a predetermined third time period, the second sub-condition being that at least one of CRC checks on data received from the MS are successful during a predetermined fourth time period, and the third sub-condition being that the strength of a channel sounding pilot signal is greater than a second threshold during a predetermined fifth time period, and
wherein the radio link estimator generates the out-of-sync indicator, if at least one of the first, second and third sub-conditions is fulfilled.
